Europäisches Patentamt

European Patent Office

Office européen des brevets

(11) Publication number: **0 124 180**
A2

# (12) EUROPEAN PATENT APPLICATION

(21) Application number: **84200599.3**

(22) Date of filing: **27.04.84**

(51) Int. Cl.³: **B 60 F 1/04,** B 61 D 15/12, B 62 D 55/04

(30) Priority: **02.05.83 NL 8301543**

(43) Date of publication of application: **07.11.84**
**Bulletin 84/45**

(84) Designated Contracting States: **BE DE FR GB IT NL SE**

(71) Applicant: **Noord-Nederlandsche Machinefabriek B.V., St. Vitusstraat 81, NL-9673 AM Winschoten (NL)**

(72) Inventor: **Bos, Fokko Menno, Abel Tasmanstraat 15, NL-9675 BA Winschoten (NL)**

(74) Representative: **Urbanus, Henricus Maria, Ir. et al, c/o Vereenigde Octrooibureaux Nieuwe Parklaan 107, NL-2587 BP 's-Gravenhage (NL)**

(54) **A land vehicle.**

(57) A vehicle comprising a frame and caterpillar tracks for ground wheels mounted under said frame. According to the invention, the frame is provided at least adjacent to, or at, one end with at least one pushing device. The pushing device comprises a fixed portion secured to the frame so as to be pivotable in a vertical plane, and a downwardly extensible portion having a free end provided with a foot plate pivoted to it. After the foot plate has reached the ground the pushing device is capable of lifting the vehicle.

EP 0 124 180 A2

<u>Title</u>: A land vehicle.

This invention relates to a land vehicle comprising a frame and caterpillar tracks or ground wheels mounted under said frame. More specifically, the invention relates to a working vehicle designed for work on, or alongside, a railway track, comprising ground wheels or caterpillar tracks mounted under a frame for movement across the ground next to the rails, and a plurality of vertically adjustable flanged wheels for movement along the rails, said flanged wheels being mounted transversely to said ground wheels or caterpillar tracks.

Such a working vehicle is disclosed in Netherlands patent application 79,07823. This prior vehicle is designed to be driven from the ground next to the rails by means of the caterpillar tracks or ground wheels laterally on to the rails, whereafter the flanged wheels are lowered until they rest on the rails, and the ground wheels or caterpillar tracks have become clear of the rails. The working vehicle can then be moved further along the rails. Similarly, by retracting the flanged wheels, the working vehicle can be driven off the rails at any desired point.

In case the railway track is laid out on an embankment, the working vehicle must climb the embankment in order to reach the rails. If the working vehicle is provided with caterpillar tracks, this means that the ascending vehicle, from an inclined position suddenly swings into the horizontal position as soon as the centre of gravity of the working vehicle has passed the upper rim of the embankment. As a result, the front end of the vehicle crashes down onto the rails, which may give rise to damage. This effect is still greater if the vehicle is provided with a tall superstructure, such as an elevated working platform. In the first place, owing to the superstructure, the centre of gravity of the vehicle comes to be higher, so that it takes a longer period of time for the centre of gravity to pass the rim of the embankment as the vehicle crawls upwards against the slope of the embankment, as a result of which the impact with which the vehicle resumes its horizontal position is stronger. Secondly, there is a chance that the superstructure becomes damaged from swaying.

If the slope of the embankment is not very firm, and for example consists of soil, and/or is steep, there is the additional chance that the position in which the working vehicle can swing into its horizontal position cannot be reached, or with difficulty only, owing to slippage of the caterpillar tracks. This problem also occurs in case ground wheels are used rather than caterpillar tracks.

It is an object of the invention to remedy the problems outlined above.

To this effect, according to the invention, a land vehicle of the kind described is characterized in that the frame is provided at least adjacent to, or at, one end with at least one pushing device comprising a fixed portion secured to said frame so as to be pivotable in a vertical plane, and a downwardly extensible portion having a free end provided with a foot plate pivoted to it, the arrangement being such that after the foot plate has reached the ground the pushing device is capable of lifting the vehicle.

The invention will now be described in more detail with reference to the accompanying drawings.

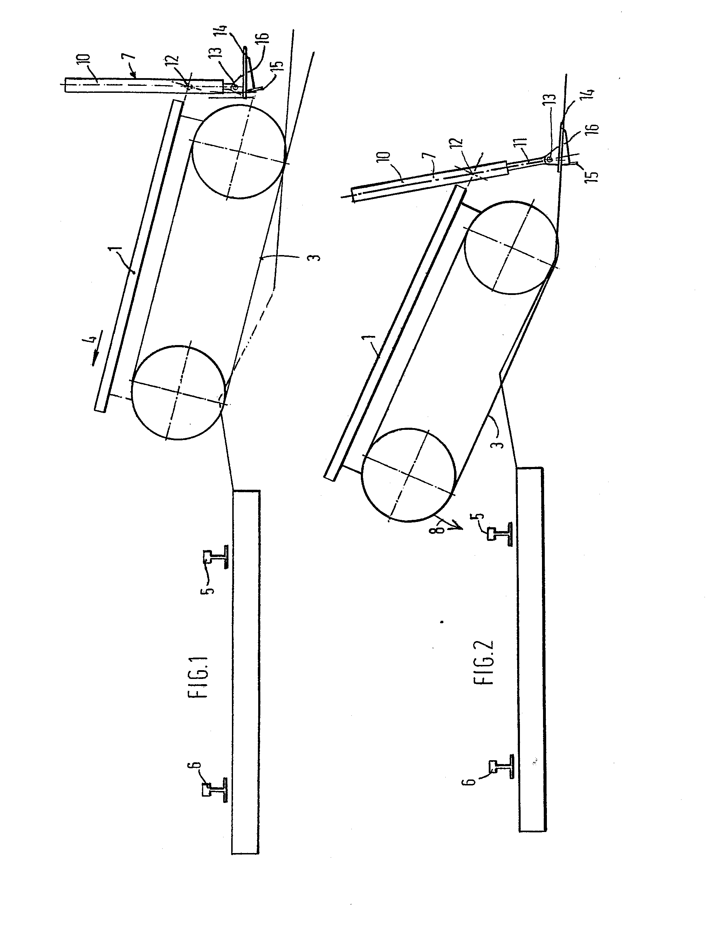

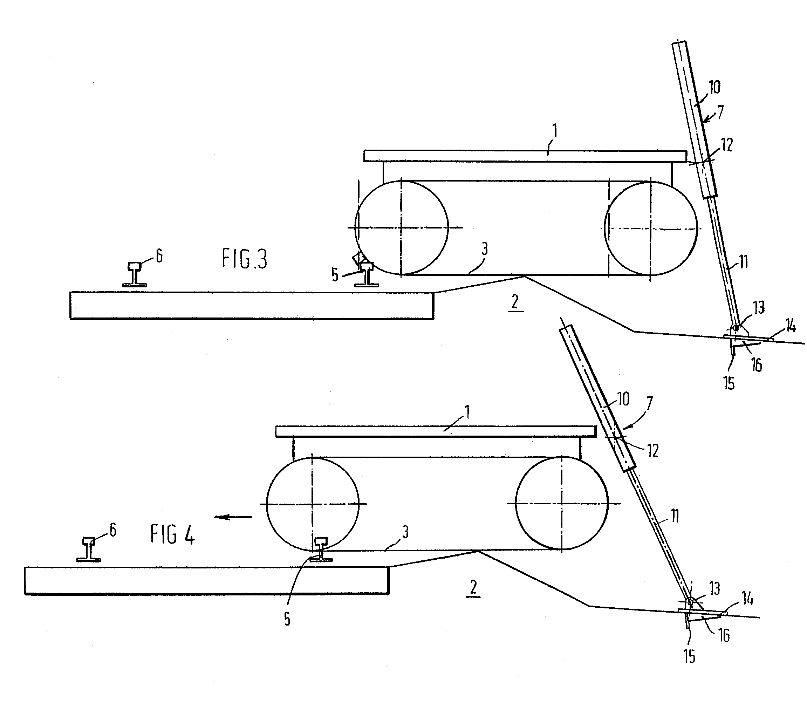

Figs. 1-4 diagrammatically show one embodiment of a land vehicle according to the invention in successive phases while climbing a slope in the field.

Fig. 1 shows a land vehicle which has just started to climb a slope 2. The vehicle is shown diagrammatically only, and comprises a frame 1, under which, in the present example, caterpillar tracks 3 are mounted, only one of which is shown. The direction of travel is indicated by an arrow 4. In the present example, the slope 2 is the slope of a railway embankment on which rails 5, 6 are mounted, and the vehicle is a working vehicle of the kind described, for example, in Netherlands patent application 79,07823.

The invention is also applicable to land vehicles of different kinds, such as armoured cars, draglines, etc.

The vehicle is provided at the back with a pushing device 7, mounted on the frame, and described in more detail hereinafter.

In the situation shown in Fig. 1, the front end of the vehicle has just reached the upper rim of the embankment. During continued movement, this front end becomes clear of the ground, and the situation shown in Fig. 2 arises. Normally, as soon as the centre of gravity of the vehicle has passed the upper rim of the embankment, the vehicle subsequently swings upon the rim as indicated by an arrow 8 so that it crashes down on to the nearest rail 5. As indicated hereinbefore, in this situation considerable damage may occur, especially if the vehicle is provided with a superstructure not shown. Furthermore, owing to falling on the rail, the vehicle may slide back, so that renewed attempts should be made. This latter may lead to the slope being "milled away", owing to which the vehicle may sink away.

This problem may also occur if the vehicle is provided with ground wheels, although in that case swaying does not occur.

When the vehicle has approximately resumed its horizontal position, the situation is as shown in Fig. 3, whereafter the vehicle can move on as indicated in Fig. 4.

In order to overcome the problems outlined above, the vehicle is equipped with a pushing device 7. In the drawing, this device is disposed at the rear end of the vehicle, as viewed in the direction of advance. As land vehicles must often be capable of being used travelling both forwardly and rearwardly, a similar pushing device may be provided at the other end, with the rear pushing device only being energized in a specific situation. For clarity, however, only one pushing device is shown in the drawings.

The pushing device preferably consists of a hydraulic piston-and-cylinder unit, comprising a first portion 10 pivoted to the frame of the vehicle, and a downwardly extensible portion 11.

The pivot point is shown diagrammetically at 12 and is disposed in the vertical longitudinal median plane of the vehicle.

In the embodiment shown, the first portion 10 is the cylinder of the piston-and-cylinder unit, and the portion 11 is the piston rod connected to the piston of the unit.

At its free, downward end the piston rod is provided with a foot plate 14, pivoted to it at 13. The foot plate is preferably provided at its bottom with a plate or blade 15, arranged approximately transversely to the foot plate, and capable of penetrating the soil to prevent the foot plate from slipping away. In the embodiment shown, the blade 15 is provided, for strengthening purposes, with one or more tie plates 16 arranged transversely to the foot plate.

The operation of the pushing device is as follows.

In the inoperative position (see Fig. 1), the piston rod 11 is retracted, and the pushing device is well clear of the bottom.

As soon as the vehicle has reached such a position that the forward end of the vehicle projects a considerable degree from the rim of the slope, but not so far yet that the vehicle swings down of its own (see Fig. 2), the pushing device 7 is energized. The piston rod is then moved down until the foot plate 14 rests on the bottom. During further movement of the piston rod the rear end of the vehicle is pushed upwards, owing to which the forward end of the vehicle is lowered until the vehicle has assumed a horizontal position and can move onto the railway track on its own. (see Figs. 3 and 4). Subsequently, the piston rod is retracted.

If, after the retraction of the piston rod, the vehicle should sink because its centre of gravity has not yet passed the upper rim of the slope, the pushing device can be re-energized.

If, instead of caterpillar tracks, ground wheels are used, the pushing device operates in a similar manner. The only difference is that, in that case, there is no freely-floating forward end of the vehicle.

In a further elaboration of the invention, a mercury switch is provided which , after the pushing device has been switched on, causes the same to be automatically switched off when the horizontal position is reached. The same mercury switch can be used for automatically re-energizing the pushing device when the vehicle sinks away. In this arrangement, preferably a certain delay period is observed  in order to render the mercury switch insensitive to minor vibrations.

In case a hydraulic piston-and-cylinder unit is used, the mercury switch can be used for switching the associated pump on and off and/or for energizing one or more electromagnetic control valves.

Instead of a hydraulic piston-and-cylinder unit, a rack-and-pinion combination can be used, in which arrangement the mercury switch can activate or de-activate an electric motor driving the pinion.

It is noted that, instead of a single pushing device mounted in the centre, it is possible to use two similar pushing devices at the rear end adjacent to the corners, or on opposite sides of the vehicle.

In the embodiment shown, the pivot point of the pushing device lies at the level of the vehicle's frame, while a considerable part of the pushing device extends above the hinge point. As shown in Fig. 4, this top portion of the pushing device swings to above the frame so that it could strike any superstructure.

This problem, if it occurs in a certain vehicle, can be remedied in a simple manner by moving the pivot point upwardly and/or backwardly by means of a standard, or by using two pushing devices placed on opposite sides of the vehicle.

In view of the foregoing, such and other modifications will readily occur to one skilled in the art without departing from the scope of the invention. Thus, for example, it is possible to provide the foot plate with a plurality of downwardly extending plates penetrating the bottom, or with depending tines penetrating the bottom.

0124180

C L A I M S :

1. A land vehicle comprising a frame and caterpillar tracks for ground wheels mounted under said frame, characterized in that said frame is provided at least adjacent to, or at, one end with at least one pushing device comprising a fixed portion secured to said frame so as to be pivotable in a vertical plane, and a downwardly extensible portion having a free end provided with a foot plate pivoted to it, the arrangement being such that after the foot plate has reached the ground the pushing device is capable of lifting the vehicle.

2. A working vehicle designed for work on or alongside a railway track, comprising ground wheels or caterpillar tracks mounted under a frame for movement across the ground next to the rails, and a plurality of vertically adjustable flanged wheels for movement along the rails, said flanged wheels being mounted transversely to said ground wheels or caterpillar tracks, characterized in that said frame is provided at least adjacent to, or at, one end with at least one pushing device comprising a fixed portion secured to said frame so as to be pivotable in a vertical plane, and a downwardly extensible portion having a free end provided with a foot plate pivoted to it, the arrangement being such that after the foot plate has reached the ground the pushing device is capable of lifting the vehicle.

3. A vehicle according to claim 1 or 2, characterized in that each pushing device comprises a hydraulic piston-and-cylinder unit, the cylinder of which is pivoted to said frame, a piston rod connected to the piston being arranged when energized to move from an inoperative position downwardly.

4. A vehicle according to any one of the preceding claims, characterized in that the foot plate is provided at its underside with at least one projection capable of penetrating the ground.

5. A vehicle according to claim 4, characterized in that at least one projection of the foot plate is a plate disposed transversely to the direction of advance of the vehicle, said plate extending downwardly.

6. A vehicle according to any one of the preceding claims, characterized by at least one pushing device secured to said frame in the longitudinal median plane of the vehicle.

7. A vehicle according to any one of the preceding claims, characterized by at least two pushing devices secured to the frame at least adjacent to two corners of the vehicle, which, as viewed in the direction of advance of the vehicle, are located at the same end.

8. A vehicle according to any one of the preceding claims, characterized in that the or each pushing device is secured to a frame portion extending at least upwardly relatively to the frame, so that the pivot point of the or each pushing device is higher than the frame.

9. A vehicle according to any one of the preceding claims, characterized by a mercury switch which after the pushing device(s) has (have) being switched on, can automatically switch off the same when the horizontal position is reached.

10. A vehicle according to claim 9, characterized in that, after having switched off the pushing device(s) upon the horizontal position being reached, the mercury switch can again automatically switch on the same upon a subsequent deviation from the horizontal position.

11. A vehicle according to claim 10, characterized in that, for switching on the pushing device(s) again, the mercury switch is connected to a delay device.

FIG.1

FIG.2

0124180

FIG.3

FIG 4